# EUROPÄISCHE PATENTSCHRIFT

(11) **EP 1 527 919 B1**
(45) Veröffentlichungstag und Bekanntmachung des Hinweises auf die Patenterteilung: **28.03.2007**
(21) Anmeldenummer: 04025160.5
(22) Anmeldetag: 22.10.2004
(51) Int. Cl.: B60H 1/32, B60H 1/00

(54) **Dachmodul für ein Fahrzeug**
Roof module for a vehicle
Module de toit pour véhicule

(30) Priorität: 28.10.2003 DE 10350177
(43) Veröffentlichungstag der Anmeldung: 04.05.2005
(73) Patentinhaber: Webasto AG, 82131 Stockdorf (DE)
(72) Erfinder: Wunderlich, Dr. Christian, 09114 Chemnitz (DE); Stelter, Dr. Michael, 09247 Chemnitz (DE)
(74) Vertreter: Schumacher & Willsau

(56) Entgegenhaltungen:
- EP-A- 0 827 855
- DE-C1- 19 853 767
- US-A1- 2003 110 787
- US-B1- 6 445 080

## Beschreibung

Die Erfindung betrifft ein Dachmodul für ein Kraftfahrzeug, mit integrierter Klimaanlage.

Ein derartiges Dachmodul ist beispielsweise aus der DE 198 53 767 C1 bekannt.

Ferner ist aus der US-B1-6 445 080 ein Elektrofahrzeug mit einer oder mehreren separaten Energieversorgungseinheiten zur Lieferung von elektrischer Energie für die Energieversorgung des Elektrofahrzeugs bekannt. Dabei ist mindestens eine der Energieversorgungseinheiten als kompaktes Modul auf dem Fahrzeugdach abnehmbar angeordnet.

Als Dachmodule im Sinne der Erfindung kommen insbesondere vormontierte komplette Fahrzeugdächer mit angrenzenden Baugruppen in Betracht, die komplett auf das Fahrzeug montiert beziehungsweise ausgetauscht werden können. Unter den Begriff Dachmodul fallen im vorliegenden Zusammenhang weiterhin Module, die dazu vorgesehen sind, auf Fahrzeugdächern montiert zu werden, sowohl im Rahmen der Fahrzeugfertigung als auch im Rahmen einer Nachrüstung. In jedem Fall wird bevorzugt, dass das Dachmodul integrierte Zusatzfunktionen aufweist.

Bekannte Klimaanlagen für Kraftfahrzeuge umfassen typischerweise einen Verdampfer mit zugeordnetem Expansionsorgan, einen Kondensator und einen Kompressor. Beispielsweise im Zusammenhang mit Personenkraftwagen, Vans oder Kleintransportern ist es bekannt, die Klimaanlage in die Fahrzeugbelüftung zu integrieren, wobei der Kompressor üblicherweise mechanisch vom Antriebsmotor des Kraftfahrzeugs angetrieben wird. Sogenannte Aufdach-Klimaanlagen dienen insbesondere der zusätzlichen Kühlung von Kleinbussen oder Transportfahrzeugen, wobei der Kompressor bei derartigen Aufdach-Klimaanlagen häufig elektrisch angetrieben wird, das heißt nicht mechanisch mit dem Antriebsmotor gekoppelt ist.

Zur (ergänzenden) Bordstromversorgung wird derzeit zunehmend der Einsatz von sogenannten APUs (Auxiliary Power Unit) auf Brennstoffzellenbasis in Erwägung gezogen, insbesondere um die Fahrzeugklimatisierung auch im Standbetrieb problemlos durchführen zu können und unabhängig vom Antriebsmotor eine höhere elektrische Leistung bereitzustellen. In diesem Zusammenhang können beispielsweise sogenannte SOFC-Brennstoffzellen zum Einsatz kommen, die mit einem einfachen Reformer kombiniert werden können. In diesem Fall kann das Brennstoffzellensystem mit den im Fahrzeug verfügbaren flüssigen Treibstoffen wie Diesel oder Benzin betrieben werden. Weiterhin sind sogenannte PEN-Brennstoffzellen bekannt, die ebenfalls zur Stromerzeugung geeignet sind und auf Wasserstoffbasis arbeiten. Der Wasserstoff kann dabei an Bord des Fahrzeugs mitgeführt oder aus anderen Betriebsstoffen, beispielsweise Methanol, mittels eines Reformers hergestellt werden.

Der Erfindung liegt die Aufgabe zugrunde, die gattungsgemäßen Dachmodule derart weiterzubilden, dass deren Funktionalität weiter erhöht wird.

Diese Aufgabe wird durch die Merkmale des Anspruchs 1 gelöst.

Vorteilhafte Ausgestaltungen und Weiterbildungen der Erfindung ergeben sich aus den Unteransprüchen.

Das erfindungsgemäße Dachmodul baut auf dem gattungsgemäßen Stand der Technik dadurch auf, dass es weiterhin ein Brennstoffzellensystem und ein Solarzellenmodul umfasst, wobei das Solarzellenmodul dazu vorgesehen ist, das erfindungsgemäße Dachmodul unabhängig von der dem Antriebsmotor zugeordneten Batterie betreiben zu können. Erfindungsgemäß wird über das Solarzellenmodul der elektrische Energiespeicher des Dachmoduls geladen so dass die zum Anfahren des Brennstoffzellensystems erforderliche Energie im Dachmodul selbst zur Verfügung steht. Diese Lösung ermöglicht beispielsweise eine vom Antriebsmotor unabhängige Standklimatisierung für einen langen Zeitraum, wobei vorzugsweise gleichzeitig zusätzlich elektrische Energie abgegeben werden kann. Durch die Anordnung des Brennstoffzellensystems in dem Dachmodul wird weiterhin wertvoller Platz beispielsweise im Motorraum gespart, da dort keine Komponenten des Brennstoffzellensystems beziehungsweise der APU untergebracht werden müssen. Dies ermöglicht es, auch Fahrzeuge mit einer APU auszustatten, die vom eigentlichen Fahrzeugkonzept her nicht dazu ausgelegt sind. Bei geeigneter Ausführung des erfindungsgemäßen Dachmoduls können weiterhin dieselben Komponenten des Systems zum Heizen und Kühlen des Innenraums benutzt werden, in vielen Fällen ohne dass ein Eingriff am Kühlsystem des Fahrzeugmotors nötig ist. Als chemische Betriebsstoffe für das Brennstoffzellensystem können Benzin, Diesel oder Brenngas aus den schon vorhandenen Fahrzeugtanks benutzt werden, sofern das Brennstoffzellensystem dafür ausgelegt ist. Dies trifft insbesondere auf SOFC-Brennstoffzellen zu. In diesem Fall ist die Integration des Dachmoduls besonders einfach und bequem, da nur ein Kraftstoff getankt werden muss und zum Betrieb des Dachmoduls nur eine zusätzliche Kraftstoff-Fördereinrichtung vom Fahrzeugtank aus nötig ist. Auch ein separater Betriebsstofftank für das Brennstoffzellensystem im Dachmodul ist denkbar, wobei auch auf andere chemische Energiequellen im Fahrzeug zurückgegriffen werden kann. Beispielsweise bei Wohnwagen und Wohnmobilen kann die andere chemische Energiequelle eine Flüssiggasanlage sein.

Das erfindungsgemäße Dachmodul kann in vorteilhafter Weise dadurch weitergebildet sein, dass es weiterhin eine oder mehrere der folgenden Komponenten umfasst:
- einen Speicher für chemische Betriebsstoffe,
- eine Fördereinrichtung für chemische Betriebsstoffe,
- einen elektrischen Energiespeicher,
- einen elektrischen Wandler,
- eine Lüftungskomponente,
- einen Stromversorgungsausgang,
- eine Beleuchtungseinrichtung,
- einen zusätzlichen Wärmetauscher,
- ein Heizgerät,
- eine elektrisch betriebene Komfortfunktion.

Der Speicher für chemische Betriebsstoffe kann beispielsweise ein Wasserstoffspeicher sein, wobei in diesem Fall auf den Einsatz eines Reformers verzichtet werden kann. Selbstverständlich können auch andere chemische Betriebsstoffe in dem Speicher enthalten sein, beispielsweise Methanol, Benzin, Diesel und so weiter.

Bei der Fördereinrichtung für chemische Betriebsstoffe kann es sich insbesondere um eine Pumpe handeln.

Der elektrische Energiespeicher ist vorzugsweise durch einen Akkumulator gebildet.

Der elektrische Wandler kann insbesondere dazu dienen, die von dem Brennstoffzellensystem gelieferte Spannung in irgendeine geeignete Gleich- und/oder Wechselspannung zu transformieren. In diesem Zusammenhang kommen insbesondere übliche Spannungen wie beispielsweise 12 V, 24 V, 110 V und/oder 220 V in Betracht.

Der Begriff Lüftungskomponente ist im vorliegenden Zusammenhang weit auszulegen und umfasst beispielsweise verschließbare Dachöffnungen, Luftführungseinrichtungen, Ausströmdüsen, Bedienelemente und so weiter.

Bei dem Stromversorgungsausgang kann es sich, ohne darauf beschränkt zu sein, beispielsweise um eine oder mehrere Steckdosen handeln, die vom Innenraum des Kraftfahrzeugs aus zugänglich sind, um irgendwelche mit elektrischer Energie betriebenen Geräte zu versorgen.

Die Beleuchtungseinrichtung kann dem Fahrzeuginnenraum und/oder dem Fahrzeugäußeren zugeordnet sein. Bei einer dem Fahrzeugäußeren zugeordneten Beleuchtungseinrichtung kann es sich beispielsweise um eine Standlichtbeleuchtung handeln, während eine dem Fahrzeuginnenraum zugeordnete Beleuchtungseinrichtung beispielsweise durch eine Leselampe, eine Schminkspiegelbeleuchtung oder eine allgemeine Innenraumbeleuchtung gebildet sein kann.

Bei dem zusätzlichen Wärmetauscher handelt es sich um einen zum Betrieb der Klimaanlage nicht zwingend erforderlichen Wärmetauscher, der beispielsweise dazu vorgesehen sein kann, von dem Brennstoffzellensystem erzeugte Prozesswärme auf einen Heizkreis zu übertragen.

Bei dem Heizgerät kann es sich sowohl um ein elektrisches Heizgerät als auch um ein brennstoffbetriebenes Heizgerät handeln. In jedem Fall wird bevorzugt, dass das Heizgerät für einen Standheizbetrieb ausgelegt ist.

Mit der Bezeichnung elektrisch betriebene Komfortfunktion sollen alle Einrichtungen umschrieben werden, die den Komfort für die Fahrzeuginsassen in irgendeiner Weise steigern. In diesem Zusammenhang kommen beispielsweise Audiogeräte, Videogeräte, Kommunikationsgeräte, Datenverarbeitungsgeräte aber auch Kühlschränke und dergleichen in Betracht.

Es ist klar, dass von den vorstehend erläuterten Komponenten auch jeweils mehr als eine Komponente vorhanden sein kann.

Im Zusammenhang mit dem erfindungsgemäßen Dachmodul wird weiterhin bevorzugt, dass es zumindest eine oder mehrere der folgenden Schnittstellen aufweist:
- eine elektrische Schnittstelle,
- eine Steuerungs-/Regelungsschnittstelle,
- eine Schnittstelle für chemische Betriebsstoffe,
- eine Schnittstelle für einen Kühl- und/oder Heizkreislauf,
- eine Abgasschnittstelle.

Unter den Begriff elektrische Schnittstelle sollen insbesondere Schnittstellen fallen, die dazu geeignet sind, dem elektrischen Dachmodul elektrische Energie zuzuführen, beispielsweise von der dem Antriebsmotor zugeordneten Batterie, als auch Schnittstellen, die dazu vorgesehen sind, elektrische Energie von dem Dachmodul abzuführen, beispielsweise um nicht dem Dachmodul zugeordnete Komponenten des Kraftfahrzeugs mit elektrischer Energie zu versorgen.

Steuerungs- und/oder Regelungsschnittstellen können insbesondere Schnittstellen zu Sensoren und/oder Bedienelementen sein, mit denen der Betrieb von dem Dachmodul zugeordneten Komponenten beeinflusst werden kann.

Als Schnittstelle für chemische Betriebsstoffe kommt beispielsweise ein Anschluss an eine mit dem Kraftstofftank des Kraftfahrzeugs verbundene Kraftstoffleitung in Betracht.

Die Schnittstelle für einen Kühl- und/oder Heizkreislauf kann sowohl dazu vorgesehen sein, dem Dachmodul vom Fahrzeug erzeugte Kälte und/oder Wärme zuzuführen, als auch umgekehrt.

Als Abgasschnittstelle kommt insbesondere ein Anschluss an irgendeine Abgasleitung in Betracht.

Auch im Zusammenhang mit den vorstehend erläuterten Schnittstellen ist klar, dass jeweils mehr als eine der entsprechenden Schnittstellen vorhanden sein kann.

Im vorstehend erläuterten Zusammenhang wird weiterhin bevorzugt, dass zumindest eine Schnittstelle im Bereich einer A-, B-, und/oder C-Säule vorgesehen ist. Diese Lösung ist insbesondere vorteilhaft, wenn das erfindungsgemäße Dachmodul direkt an den entsprechenden Säulen befestigt wird oder wenn das Dachmodul die entsprechenden Säulen selbst umfasst.

Für alle Ausführungsformen des erfindungsgemäßen Dachmoduls wird bevorzugt, dass es zumindest abschnittsweise doppelbödig ausgebildet ist. Der Begriff "doppelbödig" ist in diesem Zusammenhang weit auszulegen und soll auch Ausführungsformen umfassen, bei denen beispielsweise eine Haube auf eine Grundplatte aufgesetzt wird, auf der Komponenten des Dachmoduls angeordnet sind.

Im Zusammenhang mit dem erfindungsgemäßen Dachmodul kann weiterhin vorgesehen sein, dass es ein Fahrzeugdach ganz oder teilweise bildet. Das Dachmodul kann dabei beispielsweise optional anstelle eines einfachen Daches montiert werden. In jedem Fall wird bevorzugt, dass das Dachmodul medienseitig als auch strukturell und strömungsdynamisch eng in das Fahrzeugkonzept eingebunden ist.

Es kommen jedoch auch Ausführungsformen des erfindungsgemäßen Dachmoduls in Betracht, bei denen vorgesehen ist, dass es zur Montage auf einem Fahrzeugdach ausgelegt ist. Diese Lösung bietet sich insbesondere im Zusammenhang mit sogenannten After-Market-Lösungen beziehungsweise der Nachrüstung von Kraftfahrzeugen an.

Das erfindungsgemäße Dachmodul kann in vorteilhafter Weise dadurch weitergebildet sein, dass die Klimaanlage als Wärmepumpe betrieben werden kann. Die Benutzung der Klimaanlage als Wärmepumpe ist beispielweise möglich, wenn als Kältemittel CO₂ verwendet wird. Wenn die Klimaanlage als Wärmepumpe betreibbar ist, kann sie beispielsweise eine herkömmliche Standheizung ersetzen und den Fahrzeuginnenraum sehr schnell aufheizen, wobei in vielen Fällen dieselben Luftführungselemente wie zur Kühlung benutzt werden können.

Eine ebenfalls bevorzugte Weiterbildung der Erfindung sieht vor, dass die Klimaanlage eine elektrisch betriebene Klimaanlage ist, die von dem Brennstoffzellensystem gespeist wird. Da das Brennstoffzellensystem in der Regel unabhängig vom Antriebsmotor des Kraftfahrzeugs arbeitet, kann es die Funktion der Klimaanlage sowie auch alle weiteren Komfortfunktionen auch im Standbetrieb aufrechterhalten. Die Betriebsdauer ist in diesem Fall nur noch von der Kapazität der chemischen Betriebsstoffe abhängig. Diese haben eine wesentlich höhere Energiedichte als alle bekannten elektrischen Energiespeicher und können zudem netzunabhängig nachgefüllt beziehungsweise betankt werden.

Bei besonders bevorzugten Ausführungsformen des erfindungsgemäßen Dachmoduls ist vorgesehen, dass von dem Brennstoffzellensystem erzeugte Wärme zum Heizen des Kraftfahrzeuges genutzt werden kann. Beispielsweise im Falle von SOFC-Brennstoffzellensystemen stellen die SOFC-Zelle selbst sowie der Reformer und der in der Regel erforderliche Nachbrenner eine Wärmequelle dar. Die Kühlung dieser Komponenten erfolgt primär mit Luft und kann sekundär auch mit Wasser erfolgen. Die Kühlmedientemperaturen können dabei sehr hoch sein, beispielsweise bis zu 100 °C bei Wasser und mehrere 100 °C bei Luft. Im Falle von PEN-Brennstoffzellensystemen gilt ähnliches, wobei auch in diesem Fall die PEN-Zellen selbst sowie der Reformer mit Luft oder Wasser (oder irgendeinem anderen geeigneten Wärmeträger) gekühlt werden. In diesem Fall sind die Kühlmedientemperaturen allerdings niedriger und betragen beispielsweise 70 °C. In jedem Fall kann die anfallende Prozesswärme dazu benutzt werden, um Heizfunktionen für das Fahrzeug darzustellen, indem die Wärmeträgermedien des Klimakreises mit den Wärmeträgermedien des Brennstoffzellensystems gekoppelt werden. Dies wird dadurch begünstigt, dass die Klimaanlage und das Brennstoffzellensystem im Dachmodul räumlich benachbart zueinander angeordnet sind.

Für alle Ausführungsformen des erfindungsgemäßen Dachmoduls wird bevorzugt, dass das Brennstoffzellensystem so ausgelegt ist, dass es im Standbetrieb zumindest die dem Dachmodul zugeordneten Komponenten versorgen kann. Vorzugsweise ist das Brennstoffzellensystem jedoch so leistungsfähig, dass es auch weitere Komponenten des Fahrzeugs versorgen kann und so die Funktion einer APU vollständig übernimmt.

Die Erfindung wird nun unter Bezugnahme auf die beigefügten Zeichnungen anhand einer bevorzugten Ausführungsform beispielhaft erläutert.

Es zeigen:
- Figur 1: eine schematische perspektivische Darstellung eines Kraftfahrzeugchassis, auf dem eine Ausführungsform des erfindungsgemäßen Dachmoduls angeordnet ist, und
- Figur 2: eine schematische perspektivische Explosionszeichnung des Dachmoduls von Figur 1.

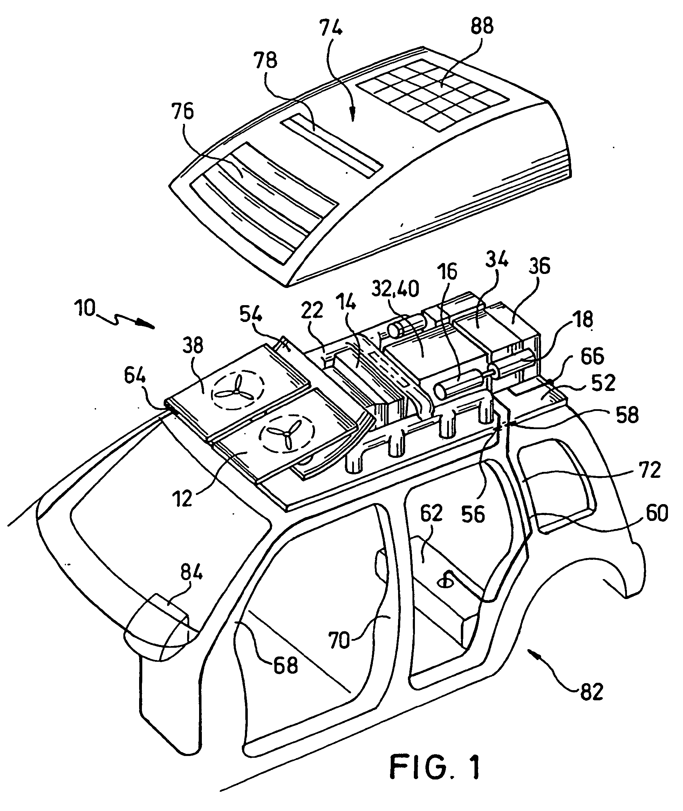

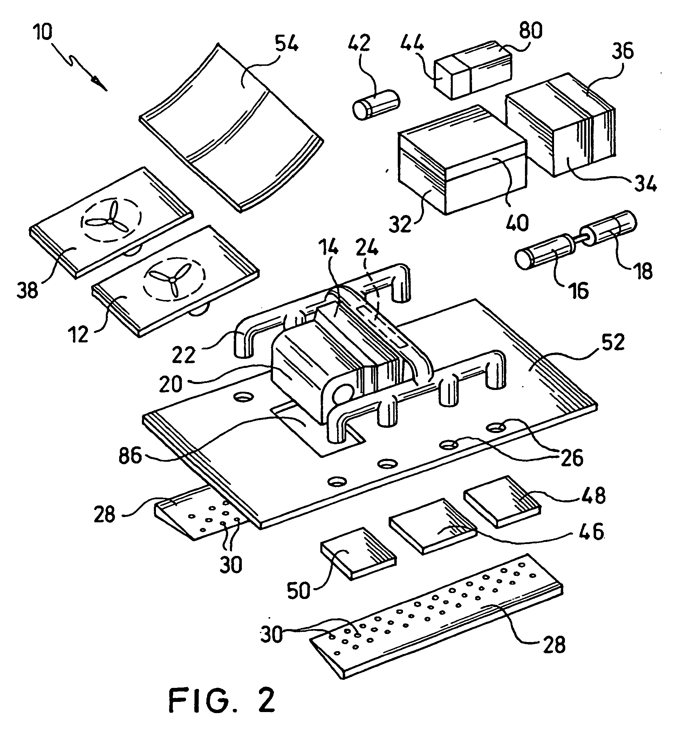

In Figur 1 ist ein insgesamt mit 82 bezeichnetes Kraftfahrzeugchassis dargestellt, das mit einem erfindungsgemäßen Dachmodul 10 ausgestattet ist, welches anhand von Figur 2 im Detail erläutert wird. In Figur 1 ist weiterhin eine dem Dachmodul 10 zugeordnete Haube 74 dargestellt, die in Figur 2 nicht gezeigt ist. Die Haube 74 umfasst ein Solarzellenmodul 88, das zur Stromerzeugung vorgesehen ist. Weiterhin ist die Haube 74 mit einem Lufteinlass 76 ausgestattet, der im montierten Zustand der Haube 74 benachbart zu einem Kondensator 12 und einem Brennstoffzellenlüfter 38 angeordnet ist. Luft, die den Kondensator 12 beziehungsweise den Brennstoffzellenlüfter 38 durchströmt hat, wird durch ein Luftleitblech 54 zu einem in der Haube 74 vorgesehenen Luftauslass 78 umgelenkt. Das dargestellte Dachmodul 10 weist eine Klimaanlage auf, deren Hauptbestandteile durch den Kondensator 12, einen Verdampfer 14, einen Kompressor 16 sowie einen Kompressorantrieb 18 gebildet sind. Weiterhin weist das Dachmodul 10 ein Brennstoffzellensystem auf, das insbesondere einen Brennstoffzellenstack 32, einen Reformer 34, einen Speicher 36 sowie einen Wärmetauscher 40 umfasst. Zumindest von der Klimaanlage 12, 14, 16, 18 klimatisierte Luft wird über eine Luftverteilung 22 dem Innenraum des Fahrzeugs zugeführt. Sowohl die Klimaanlage 12, 14, 16, 18 als auch das Brennstoffzellensystem 32, 34, 38 sind im dargestellten Fall auf einer tragenden Dachstruktur 52 angeordnet, so dass das vormontierte Dachmodul 10 bei der Endmontage des Fahrzeugs als Ganzes aufgesetzt werden kann. Um das Dachmodul 10 funktional in das Fahrzeug einzubinden sind mehrere Schnittstellen vorhanden. Im dargestellten Fall bildet eine Schnittstelle 56 eine elektrische Schnittstelle sowie eine Steuerungs-/Regelungsschnittstelle. Über die Schnittstelle 56 ist im dargestellten Fall eine Bedieneinheit 84 angeschlossen, über die die Funktion der Komponenten des Dachmoduls 10 beeinflusst werden kann. Die Schnittstelle 56 ist im dargestellten Fall im Bereich der C-Säule 72 vorgesehen. Ebenso gut könnte sie jedoch auch im Bereich der A-Säule 68 angeordnet sein. Weiterhin ist eine Schnittstelle 58 für chemische Betriebsstoffe vorgesehen, wobei die Schnittstelle 58 im Bereich der C-Säule angeordnet ist und eine Verbindung zu einer Kraftstoffleitung 60 schafft, die ihrerseits mit einem Kraftstofftank 62 in Verbindung steht. Eine Abgasschnittstelle 66 sowie eine Schnittstelle 64 für einen Kühl-/Heizkreislauf sind ebenfalls vorgesehen, wobei letztere im Bereich der A-Säule angeordnet ist. Selbstverständlich wäre es ebenfalls möglich, eine oder mehrere der Schnittstellen 56, 58, 64, 66 im Bereich einer B-Säule 70 anzuordnen.

Obwohl derzeit als Kältemittel für Klimaanlagen vorzugsweise R-134a eingesetzt wird, kommt im Rahmen der Erfindung auch CO₂ als Kältemittel in Betracht. Neben ökologischen Vorteilen (keine Schädigung der Ozonschicht) haben CO₂-Klimaanlagen den Vorteil eines höheren Betriebsdrucks und erlauben damit kleinere Kompressoren. Weiterhin kann eine CO₂-Klimaanlage als Wärmepumpe betrieben werden, was es ermöglicht, den Fahrzeuginnenraum sehr schnell aufzuheizen.

In Figur 2 sind die wesentlichen Komponenten des Dachmoduls 10 in einer Explosionszeichnung dargestellt. Sämtliche Komponenten stehen direkt oder indirekt mit der tragenden Dachstruktur 52 in Verbindung. Diese Dachstruktur 52 weist Öffnungen 26 auf, in die die Endabschnitte der Luftverteilung 22 münden, in der weiterhin ein elektrisches Heizgerät 24 vorgesehen ist.

Anstelle des elektrischen Heizgerätes 24 können selbstverständlich auch andere Heizgeräte vorgesehen sein, beispielsweise brennstoffbetriebene Heizgeräte. Insbesondere wenn die Klimaanlage als Wärmepumpe betreibbar ist, kann gegebenenfalls auf ein separates Heizgerät verzichtet werden. Auf der dem Fahrzeuginnenraum zugewandten Seite der tragenden Dachstruktur 52 sind zwei Luftaustrittselemente 28 vorgesehen, die mit einer Vielzahl von Durchbrüchen beziehungsweise Düsen 30 ausgestattet sind. Auf diese Weise können die Luftausströmöffnungen über das gesamte Fahrzeugdach verteilt werden, was auch eine zugfreie Klimatisierung von Teilen des Innenraums ermöglicht, die von üblicherweise vorgesehenen Luftausströmdüsen (zum Beispiel im Armaturenbrett) nicht erreicht werden. Aufgrund der Vielzahl der Düsen 30 kann weiterhin die Strömungsgeschwindigkeit der Luft verringert werden, was den Komfort ebenfalls steigert.

Auf der dem Fahrzeuginnenraum zugewandten Seite der tragenden Dachkonstruktion 52 ist weiterhin ein Stromversorgungsausgang 56 in Form von einer oder mehreren Steckdosen vorgesehen. Über diesen Stromversorgungsausgang 46 werden vorzugsweise unterschiedliche Versorgungsspannungen zur Verfügung gestellt, mit denen Geräte im Fahrzeuginnenraum betrieben werden können.

Benachbart zum Stromversorgungsausgang 46 ist eine Beleuchtungseinrichtung 48 sowie eine Komfortfunktion 50 angedeutet, wobei letztere beispielsweise durch Audio-, Video- und/oder Kommunikationseinrichtungen gebildet sein kann.

Ein Lüftungs- beziehungsweise Umwälzgebläse 20 erzeugt einen Luftstrom, der den Verdampfer 14 durchströmt, bevor er der Luftverteilung 22 zugeführt wird. Um einen Umluftbetrieb zu ermöglichen, steht das Lüftungs- beziehungsweise Umwälzgebläse 20 mit einer Ausnehmung 86 in der tragenden Dachkonstruktion 52 in Verbindung.

Der Verdampfer 14 wirkt mit einem Kondensator 12 einem Kompressor 16 und einem elektrischen Kompressorantrieb 18 zusammen.

Gespeist wird der elektrische Kompressorantrieb 18 von dem Brennstoffzellensystem, dessen primäre Bestandteile durch den Brennstoffzellenstack 32, den Reformer 34 und den Brennstoffzellenlüfter 38 gebildet sind. Gemäß der Darstellung von Figur 2 ist weiterhin ein optionaler Speicher 36 für chemische Betriebsstoffe, eine Pumpe 42, ein Wandler 44 sowie ein elektrischer Energiespeicher 80 vorgesehen. Weiterhin ist ein zusätzlicher Wärmetauscher 40 angedeutet, über den von dem Brennstoffzellensystem erzeugte Prozesswärme zum Beheizen des Kraftfahrzeuginnenraums abgeführt werden kann.

Die Funktion des Luftleitblechs 54 wurde bereits anhand von Figur 1 erläutert.

Mit der anhand der Figuren 1 und 2 beschriebenen Ausführungsform der Erfindung können insbesondere die folgenden Vorteile realisiert werden:
- Durch die Verlagerung von Klima- und Komfortfunktionen in das Dachmodul 10 wird an anderer Stelle (zum Beispiel im Motorraum) wertvoller Platz gespart. Die Erfindung stellt eine Kombination von an sich bekannten Dachmodulen und Aufdach-Klimaanlagen sowie deren Erweiterung mit den neuen Funktionen Standklimatisierung und APU zum integrierten E-nergiedach dar.
- Fahrzeuge können flexibel mit Komfortfunktionen ausgestattet werden, ohne bereits vorhandene Fahrzeugkonzepte zu ändern. Eine Nachrüstung bestehender Fahrzeuge ist ebenfalls möglich, da nur das Dach oder Teile desselben ausgewechselt werden müssen.
- Bei geeigneter Ausführung können dieselben Komponenten des Systems zum elektrischen Heizen und Kühlen des Innenraums benutzt werden, ohne dass ein Eingriff am Kühlsystem des Fahrzeugmotors nötig ist. Zusätzlich oder alternativ können selbstverständlich auch elektrische Heizelemente im Fahrzeug betrieben werden.
- Die Integration der Klimatisierung in das Fahrzeugdach bietet eine Möglichkeit zur angenehmeren Klimatisierung aufgrund der möglichen Verteilung von Luftausströmöffnungen über das ganze Fahrzeugdach. Damit können Teile des Innenraums zugfrei klimatisiert werden, die von herkömmlichen Luftausströmdüsen (zum Beispiel im Armaturenbrett) nicht erreicht werden. Wie bereits erwähnt, wird beim Einsatz einer Vielzahl von Düsen weiterhin die Strömungsgeschwindigkeit der Luft verringert, was als angenehm empfunden wird.
- Die Funktion Belüftung/Klimatisierung kann vom Cockpitmodul in das Dachmodul verlagert werden. Dies erlaubt insbesondere in Kombination mit einer Elektrifizierung deutlich verbesserte Fahrzeugpackaging- und Bedienkonzepte, auch wenn das Grundprinzip des Antriebs über einen Verbrennungsmotor beibehalten wird.
- Alle Klima- und Komfortfunktionen sind im Standbetrieb bei abgeschaltetem Antriebsmotor verfügbar.
- Es besteht die Möglichkeit, zusätzliche Geräte mit Standardanschlüssen, beispielsweise 12 V oder 220 V, im Fahrzeug zu betreiben, ohne die beim Stand der Technik auftretende Limitierung der Betriebsdauer im Fahr- und/oder Standbetrieb aufgrund der begrenzten Kapazität von Bordnetz beziehungsweise Fahrzeugbatterie.
- Da Brennstoffzellensystem sehr leise arbeiten, kann die Geräuschbelästigung beispielsweise im Vergleich zu bekannten Systemen mit Verbrennungsmotor verringert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Dachmodul
- 12: Kondensator
- 14: Verdampfer
- 16: Kompressor
- 18: Kompressorantrieb
- 20: Lüftungsgebläse/Umwälzgebläse
- 22: Luftverteilung
- 24: Heizgerät
- 26: Öffnungen
- 28: Lutaustrittselement
- 30: Durchbrüche/Düsen
- 32: Brennstoffzellenstack
- 34: Reformer
- 36: Speicher
- 38: Brennstoffzellenlüfter
- 40: Wärmetauscher
- 42: Fördereinrichtung/Pumpe
- 44: Wandler
- 46: Stromversorgungsausgang
- 48: Beleuchtungseinrichtung
- 50: Komfortfunktion
- 52: tragende Dachstruktur
- 54: Luftleitblech
- 56: elektrische Schnittstelle; Steuerungs-/Regelungsschnittstelle
- 58: Schnittstelle für chemische Betriebsstoffe
- 60: Kraftstoffleitung
- 62: Kraftstofftank
- 64: Schnittstelle für einen Kühl-/Heizkreislauf
- 66: Abgasschnittstelle
- 68: A-Säule
- 70: B-Säule
- 72: C-Säule
- 74: Haube
- 88: Solarzellenmodul
- 78: Luftauslass
- 76: Lufteinlass
- 80: elektrischer Energiespeicher
- 82: Kraftfahrzeugchassis
- 84: Bedieneinheit
- 86: Ausnehmung

## Patentansprüche

1. Dachmodul (10) für ein Fahrzeug, mit integrierter Klimaanlage (12, 14, 16, 18), **dadurch gekennzeichnet, dass** es weiterhin ein Brennstoffzellensystem (32, 34, 38) und ein Solarzellenmodul (88) umfasst, wobei das Solarzellenmodul (88) dazu vorgesehen ist, einen elektrischen Energiespeicher des Dachmoduls zu laden, so dass die zum Anfahren des Brennstoffzellensystems (32,34,38) erforderliche Energie im Dachmodul selbst zur Verfügung steht.

2. Dachmodul (10) nach Anspruch 1, **dadurch gekennzeichnet, dass** es weiterhin eine oder mehrere der folgenden Komponenten umfasst:
- einen Speicher (36) für chemische Betriebsstoffe,
- eine Fördereinrichtung (42) für chemische Betriebsstoffe,
- einen elektrischen Energiespeicher (80),
- einen elektrischen Wandler (44),
- eine Lüftungskomponente (20),
- einen Stromversorgungsausgang (46),
- eine Beleuchtungseinrichtung (48),
- einen zusätzlichen Wärmetauscher (40),
- ein Heizgerät (24),
- eine elektrisch betriebene Komfortfunktion (50).

3. Dachmodul (10) nach Anspruch 1 oder 2, **dadurch gekennzeichnet, dass** es zumindest eine oder mehrere der folgenden Schnittstellen aufweist:
- eine elektrische Schnittstelle (56),
- eine Steuerungs-/Regelungsschnittstelle (56),
- eine Schnittstelle (58) für chemische Betriebsstoffe,
- eine Schnittstelle (64) für einen Kühl- und/oder Heizkreislauf,
- eine Abgasschnittstelle (66).

4. Dachmodul (10) nach Anspruch 3, **dadurch gekennzeichnet, dass** zumindest eine Schnittstelle im Bereich einer A- (68), B- (70), und/oder C-Säule (72) vorgesehen ist.

5. Dachmodul (10) nach einem der vorhergehenden Ansprüche, **dadurch gekennzeichnet, dass** es zumindest abschnittsweise doppelbödig ausgebildet ist.

6. Dachmodul (10) nach einem der vorhergehenden Ansprüche, **dadurch gekennzeichnet, dass** es ein Fahrzeugdach ganz oder teilweise bildet.

7. Dachmodul (10) nach einem der vorhergehenden Ansprüche, **dadurch gekennzeichnet, dass** es zur Montage auf einem Fahrzeugdach ausgelegt ist.

8. Dachmodul (10) nach einem der vorhergehenden Ansprüche, **dadurch gekennzeichnet, dass** die Klimaanlage (12, 14, 16, 18) als Wärmepumpe betrieben werden kann.

9. Dachmodul (10) nach einem der vorhergehenden Ansprüche, **dadurch gekennzeichnet, dass** die Klimaanlage (12, 14, 16, 18) eine elektrisch betriebene Klimaanlage (12, 14, 16, 18) ist, die von dem Brennstoffzellensystem (32, 34, 38) gespeist wird.

10. Dachmodul (10) nach einem der vorhergehenden Ansprüche, **dadurch gekennzeichnet, dass** von dem Brennstoffzellensystem (32, 34, 38) erzeugte Wärme zum Heizen des Kraftfahrzeuges genutzt werden kann.

11. Dachmodul (10) nach einem der vorhergehenden Ansprüche, **dadurch gekennzeichnet, dass** das Brennstoffzellensystem (32, 34, 38) so ausgelegt ist, dass es im Standbetrieb zumindest die dem Dachmodul (10) zugeordneten Komponenten versorgen kann.

## Claims

1. Roof module (10) for a vehicle, comprising an integrated air conditioning system (12, 14, 16, 18), **characterised in that** it further comprises a fuel cell system (32, 34, 38) and a solar cell module (88), the solar cell module (88) being designed to charge an electrical energy store of the roof module, so that the energy required for starting the fuel cell system (32, 34, 38) is available in the roof module itself.

2. Roof module (10) according to Claim 1, **characterised in that** it further comprises one or more of the following components:
- a store (36) for chemical fuels,
- a delivery means (42) for chemical fuels,
- an electrical energy store (80),
- an electrical converter (44),
- a ventilation component (20),
- a power supply output (46),
- a lighting means (48),
- an additional heat exchanger (40),
- a heater (24),
- an electrically operated comfort function (50).

3. Roof module (10) according to Claim 1 or 2, **characterised in that** it comprises at least one or more of the following interfaces:
- an electrical interface (56),
- a control interface (56),
- an interface (58) for chemical fuels,
- an interface (64) for a cooling and/or heating circuit,
- an exhaust gas interface (66).

4. Roof module (10) according to Claim 3, **characterised in that** at least one interface is provided in the region of an A-pillar (68), B-pillar (70), and/or C-pillar (72).

5. Roof module (10) according to one of the preceding claims, **characterised in that** at least sections of the module are double-bottomed.

6. Roof module (10) according to one of the preceding claims, **characterised in that** it forms all or part of a vehicle roof.

7. Roof module (10) according to one of the preceding claims, **characterised in that** it is designed for mounting on a vehicle roof.

8. Roof module (10) according to one of the preceding claims, **characterised in that** the air conditioning system (12, 14, 16, 18) can be operated as a heat pump.

9. Roof module (10) according to one of the preceding claims, **characterised in that** the air conditioning system (12, 14, 16, 18) is an electrically operated air conditioning system (12, 14, 16, 18) which is supplied by the fuel cell system (32, 34, 38).

10. Roof module (10) according to one of the preceding claims, **characterised in that** heat generated by the fuel cell system (32, 34, 38) can be used for heating the motor vehicle.

11. Roof module (10) according to one of the preceding claims, **characterised in that** the fuel cell system (32, 34, 38) is designed so as to be able to supply at least the components assigned to the roof module (10) in stationary operation.

## Revendications

1. Module de toit (10) pour véhicule intégrant une climatisation (12, 14, 16, 18), **caractérisé en ce qu'**il comprend un système de cellules à combustible (32, 34, 38) et un module de panneaux solaires (88), le module de panneaux solaires (88) étant prévu pour charger un réservoir d'énergie électrique du module de toit, de sorte que l'énergie électrique nécessaire à faire démarrer le système de cellules à combustible (32, 34, 38) est disponible dans le module de toit lui-même.

2. Module de toit (10) selon la revendication 1, **caractérisé en ce qu'**il comprend en outre un ou plusieurs des composants suivants :
- un réservoir (36) pour combustibles chimiques,
- un dispositif de transport (42) pour combustibles chimiques,
- un réservoir d'énergie électrique (80),
- un convertisseur électrique (44),
- un élément de ventilation (20),
- une sortie d'alimentation électrique (46),
- un dispositif d'éclairage (48),
- un échangeur thermique supplémentaire (40),
- un appareil de chauffage (24),
- une fonction électrique "confort" (50).

3. Module de toit (10) selon la revendication 1 ou 2, **caractérisé en ce qu'**il présente au moins une ou plusieurs des interfaces suivantes :
- une interface électrique (56),
- une interface de commande/régulation (56),
- une interface (58) pour combustibles chimiques,
- une interface (64) pour un circuit de refroidissement et/ou de chauffage,
- une interface (66) pour les gaz d'échappement.

4. Module de toit (10) selon la revendication 3, **caractérisé en ce qu'**est prévue au moins une interface dans la zone d'un montant A (68), B (70) et/ou C (72).

5. Module de toit (10) selon l'une des revendications précédentes, **caractérisé en ce qu'**il est réalisé au moins partiellement à double fond.

6. Module de toit (10) selon l'une des revendications précédentes, **caractérisé en ce qu'**il constitue entièrement ou partiellement un toit de véhicule.

7. Module de toit (10) selon l'une des revendications précédentes, **caractérisé en ce qu'**il est conçu pour être monté sur un toit de véhicule.

8. Module de toit (10) selon l'une des revendications précédentes, **caractérisé en ce que** la climatisation (12, 14, 16, 18) peut être utilisée en tant que pompe à chaleur.

9. Module de toit (10) selon l'une des revendications précédentes, **caractérisé en ce que** la climatisation (12, 14, 16, 18) est une climatisation électrique (12, 14, 16, 18) alimentée par le système de cellules à combustible (32, 34, 38).

10. Module de toit (10) selon l'une des revendications précédentes, **caractérisé en ce que** de la chaleur produite par le système de cellules à combustible (32, 34, 38) peut être utilisée pour chauffer le véhicule automobile.

11. Module de toit (10) selon l'une des revendications précédentes, **caractérisé en ce que** le système de cellules à combustible (32, 34, 38) est conçu de telle sorte qu'en mode veille, il peut au moins alimenter les composants associés au module de toit (10).
